# EUROPÄISCHE PATENTSCHRIFT

(11) **EP 1 466 079 B1**
(45) Veröffentlichungstag und Bekanntmachung des Hinweises auf die Patenterteilung: **23.03.2005**
(21) Anmeldenummer: 02793073.4
(22) Anmeldetag: 18.12.2002
(51) Int. Cl.: F01D 5/28, F01D 25/00, F01D 5/30, B23P 15/04

(54) **TURBINE MIT MINDESTENS VIER STUFEN UND VERWENDUNG EINER TURBINENSCHAUFEL MIT VERRINGERTER MASSE**
TURBINE COMPRISING AT LEAST FOUR STAGES AND USE OF A TURBINE BLADE WITH A REDUCED MASS
TURBINE COMPORTANT AU MOINS QUATRE ETAGES ET UTILISATION D'UNE AUBE DE TURBINE PRESENTANT UNE MASSE REDUITE

(30) Priorität: 18.01.2002 EP 02001348
(43) Veröffentlichungstag der Anmeldung: 13.10.2004
(73) Patentinhaber: Siemens Aktiengesellschaft, 80333 München (DE)
(72) Erfinder: BAST, Ulrich, 81667 München (DE); HERMANN, Wolfgang, 45481 Mühlheim a.d. Ruhr (DE)
(86) Internationale Anmeldenummer: PCT/EP2002/014499
(87) Internationale Veröffentlichungsnummer: WO 2003/060292

(56) Entgegenhaltungen:
- EP-A- 0 980 961
- FR-E- 57 426
- GB-A- 993 412
- GB-A- 2 027 496
- US-A- 4 247 259
- US-A- 4 285 634
- US-A- 5 403 153
- US-A- 5 743 713

## Beschreibung

Die Erfindung betrifft eine Turbine mit mindestens vier Stufen gemäß Anspruch 1 und Verwendung einer Turbinenschaufel mit verringerter Dichte gemäss Anspruch 9.

Die Verwendung von keramischen Leitschaufeln in Gasturbinen ist aus der US-PS 3,992,127 bekannt. Keramische Leitschaufeln werden eingesetzt, weil die Keramik gute Hochtemperatureigenschaften aufweist. Insbesondere in der ersten Reihe hinter der Brennkammer (erste Stufe der Turbine) treten besonders hohe Temperaturen auf, die nur Keramiken aushalten können, wobei die Turbinenschaufeln in der ersten Reihe die kleinsten sind.

Aus der US-PS 5,743,713 ist eine keramische Schaufel bekannt, die in eine metallische Läuferscheibe einer Turbine eingesetzt ist.

Aus der US-PS 4,563,128 ist eine keramische Schaufel bekannt, die einen metallischen Kern aufweist, der außen mit Keramik umkleidet ist und sich bis zu einem radialen Ende der Schaufel erstreckt. Der Volumenanteil des metallischen Kerns ist sehr hoch.

Die US 4,285,634 offenbart eine Hybridschaufel aus einem metallischen Kern und einer dünnen Wand aus Keramik.

Die US 5,403,153 offenbart, dass eine Turbinenschaufel im Inneren mit Keramik ausgefüllt ist. Die Keramik bildet nicht den äußeren Bestandteil der Schaufel.

Die FR 99,820 offenbart ebenso wie die US-PS 4,247,259 oder die GB 2 027 496 eine Turbinenschaufel, bei dem eine dünne keramische Wand durch einen inneren metallischen Kern gehalten wird.

Keramische Laufschaufeln werden bisher nur auf Grund ihrer hohen Temperaturbeständigkeit in der oder den temperaturkritischen Stufen einer Turbine eingesetzt, während in den nachfolgenden Stufen üblicherweise metallische Laufschaufeln (insbesondere aus Ni-Basislegierungen oder aus TiAl-Legierungen) Verwendungen finden.

Eine deutliche Steigerung des Wirkungsgrades von Gasturbinen kann erzielt werden, wenn zumindest ab der vierten Stufe die Turbinenlaufschaufeln z.B. um etwa 20% gegenüber einer herkömmlichen Dimensionierung vergrößert werden. Diese Vergrößerung ab der vierten Stufe führt allerdings bei unveränderter Drehzahl zu einer erheblichen Zunahme der Fliehkräfte bei den Schaufeln, welche diese und die Scheiben, an denen die Schaufeln befestigt sind, in unzulässiger Weise belasten.

Aufgabe der Erfindung ist es deshalb, eine Turbine aufzuzeigen, deren Wirkungsgrad gegenüber einer Turbine mit herkömmlicher Beschaufelung erhöht ist.

Die Aufgabe wird dadurch gelöst, dass die Turbine in der vierten Stufe jeweils Laufschaufeln mit einer Länge von mindestens 50cm Länge aufweist, die einen hohen Anteil von einem Material mit einer Dichte von maximal 4g/cm³ haben und bspw. aus Keramik sind, wodurch die Masse gegenüber einer üblichen metallischen Beschaufelung in herkömmlicher Dimensionierung deutlich verringert ist. Daher kann die Schaufellänge oder Schaufelblattlänge gegenüber metallischen Schaufeln erheblich verlängert werden.

Es können auch Vollkeramik- oder Hohlkeramikschaufeln verwendet werden, die auf metallischen Scheiben des Turbinenläufers befestigt sind, wie es aus der US-PS 5,743,713 bekannt ist.

Ebenso vorteilhaft ist es, keramische Laufschaufeln zu verwenden, die einen metallischen Kern aufweisen, der von Keramik umgeben ist. Dabei ist der Volumenanteil der Keramik sehr hoch, so dass gegenüber einer rein metallischen Schaufel mit einer eventuell vorhandenen dünnen keramischen Schutzschicht eine deutlich geringere Masse vorhanden ist.

Ein weiterer Vorteil einer leichteren Schaufel ist es, dass die mechanische Belastung der Scheibe, an der die Schaufel befestigt ist, bei der Rotation aufgrund der geringeren anhängenden Masse kleiner ist.

In den Figuren ist die Erfindung schematisch dargestellt und wird nachfolgend mit weiteren Einzelheiten und vorteilhaften Weiterbildungen näher erläutert.

Es zeigen
Figur 1 eine Gasturbine,
Figur 2 einen Teilbereich einer Gasturbine mit einer vierten Laufschaufelstufe,
Figur 3 eine Laufschaufel und eine Läuferscheibe,
Figur 4 einen Schnitt entlang der Linie IV-IV der Figur 3,
Figur 5a, b weitere Ausführungsbeispiele einer Laufschaufel.

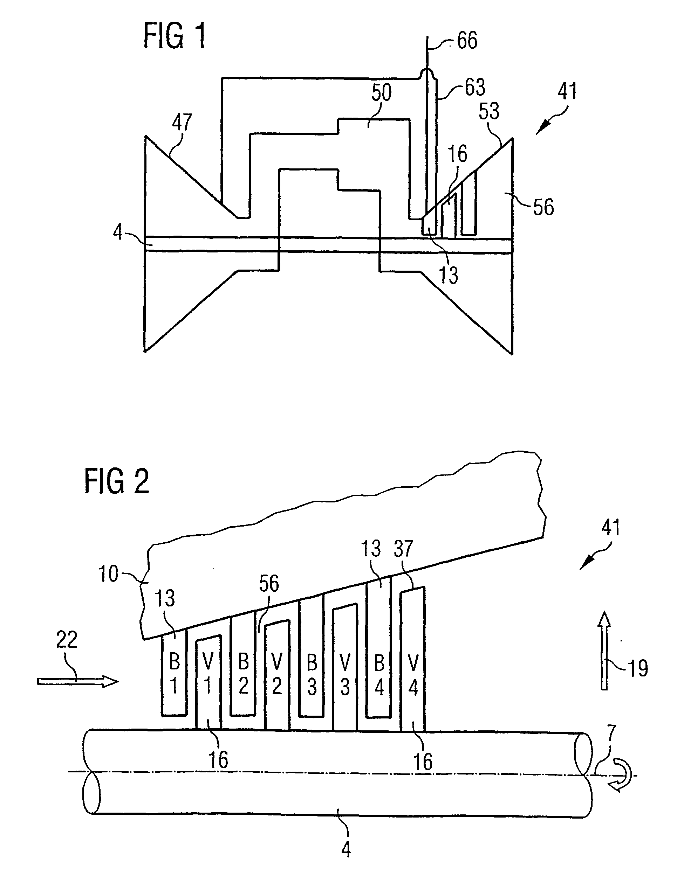

Figur 1 zeigt schematisch in einem Längsschnitt eine Turbine, bspw. eine Gasturbine 41. Die Erfindung ist aber nicht beschränkt auf eine Gasturbine.

Entlang einer einen Zuganker 4 aufweisenden Turbinenwelle sind ein Verdichter 47, eine Brennkammer 50 und ein Turbinenteil 53 hintereinander angeordnet. Das Turbinenteil 53 weist einen Heissgaskanal 56 auf. Im Heissgaskanal 56 sind Gasturbinenschaufeln 13, 16 angeordnet. Leitschaufel- und Laufschaufelkränze sind wechselnd aufeinanderfolgend vorgesehen. Die Gasturbinenschaufeln 13, 16 werden beispielsweise über eine kombinierte Luft- und/oder Dampfkühlung gekühlt. Dazu wird beispielsweise dem Verdichter 47 Verdichterluft entnommen und über eine Luftführung 63 den Gasturbinenschaufeln 13, 16 zugeführt. Über eine Dampfzuführung 66 wird den Gasturbinenschaufeln 13, 16 bspw. auch Dampf zugeführt. Vorzugsweise stammt dieser Dampf aus einer Dampfturbine eines kombinierten Gas- und Dampfprozesses.

Figur 2 zeigt einen Ausschnitt einer Gasturbine 41. Die Gasturbine 41 hat eine Turbinenwelle mit einem Zuganker 4, der sich um eine Achse 7 dreht. In radialer Richtung 19, die senkrecht zur Achse 7 verläuft, erstrecken sich mehrere Leitschaufeln 13 und mehrere Laufschaufeln 16, die bspw. in dem Heissgaskanal 56 angeordnet sind. Es sind mindestens vier Laufschaufelreihen und bspw. vier Leitschaufelreihen, also vier Stufen vorhanden. Die erste Leitschaufelreihe kann bspw. durch eine spezielle Brenneranordnung ersetzt werden. Von den Schaufeln 16 in der vierten Stufe ist hier nur eine beispielhaft dargestellt.

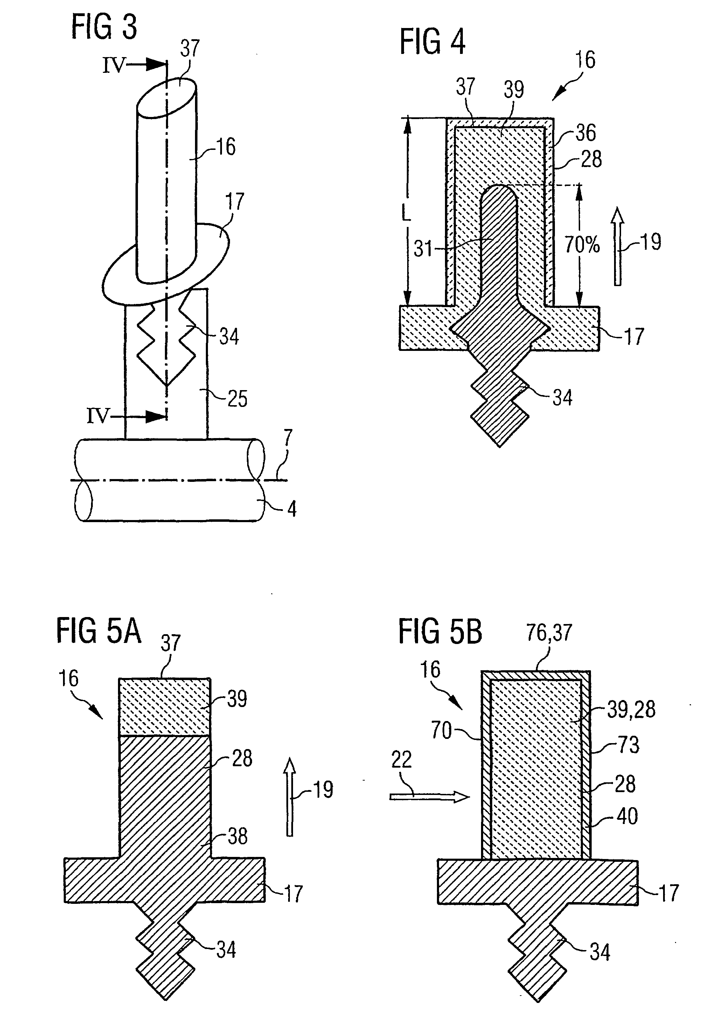

Die Laufschaufeln 16 sind beispielsweise auf Metallscheiben (25, Fig. 3) an der durch den Zuganker 4 zusammengehaltenen Turbinenwelle befestigt und drehen sich mit dem Zuganker 4 um die Achse 7.

Die Leitschaufeln 13 sind drehfest an einem Gehäuse 10 der Gasturbine 41 befestigt.
In Richtung der Achse 7 strömt ein Heißgas 22 in der Zeichnung von links nach rechts und ist mit einem Pfeil schematisch dargestellt.

Die in Strömungsrichtung 22 vierte Laufschaufelreihe ist mit V4 gekennzeichnet. Die Laufschaufeln in der vierten Stufe sind jeweils Laufschaufeln 16, die einen hohen Materialvolumenanteil aus einem Material mit einer Dichte von maximal 4g/cm³ haben und bspw. aus Keramik sind und die eine Länge von mindestens 50cm, insbesondere von mindestens 65cm aufweisen.

Da die Dichte von keramischen Werkstoffen im Bereich von 1,5 bis 3,5g/cm³ liegt und damit deutlich unter den Dichten von Nickel-Basis-Legierungen mit 8g/cm³ und von TiAl-Legierungen von etwa 4,5g/cm³ liegt, weist eine solche keramische Laufschaufel eine gegenüber einer entsprechenden metallischen Laufschaufel deutliche Reduzierung der Masse auf, so dass bei der Rotation dieser Laufschaufeln geringere Fliehkräfte, insbesondere am äußeren radialen Ende 37 der Laufschaufel 16 auftreten und insbesondere den Fuß der Laufschaufel 16 und dessen Verankerung in der Turbinenwelle belasten.

Durch die Verlängerung der Turbinenlaufschaufeln der vierten Reihe um z.B. etwa 20% lässt sich eine erhebliche Steigerung des Wirkungsgrades von Gasturbinen erzielen. Keramische Laufschaufeln sind beispielsweise ganz aus Keramik, wobei die Keramik vorteilhaft aus verschiedenen Schichten von Keramiken bestehen kann. So können faserverstärkte CMC Oxidkeramiken oder faserverstärkte CMC-Nichtoxidkeramiken nicht-oxidische Keramiken wie z. B. Kohlenstofffasern oder SiC-Fasern in einer entsprechenden Kohlenstoff- oder Silizium-Karbid-Matrix verwendet werden. Ebenso können oxidische Systeme verwendet werden, z. B. Mullit-Fasern oder Aluminium-Oxid-Fasern in einer Mullit-Matrix.

Die Keramiken können wiederum mit einer Schutzschicht 36 (Fig. 4a) gegen Korrosion und Oxidation beschichtet sein, wie sie von den metallischen Turbinenschaufeln bekannt sind: Yttrium stabilisiertes Zirkonoxid, Bornitrid, Spinelle.

Figur 3 zeigt eine Laufschaufel 16 mit einer Länge L zwischen Plattform 17 und radialem Ende der Laufschaufel 16, die bspw. vollkommen aus Keramik gebildet und in einer metallischen Läuferscheibe 25 drehfest eingesetzt ist. Die metallische Scheibe 25 ist mit dem Zuganker 4 verbunden und dreht sich mit ihm.

Der Durchmesser der Scheibe 25 ist nicht größer als üblich und auch nicht den höchsten Temperaturen innerhalb des Heissgaskanals 56 ausgesetzt, so dass man wie bei einer herkömmlichen Turbine weiterhin Metall als Material für die Scheibe 25 verwenden kann.

Ebenso ist es möglich, sogenannte Hybrid-Turbinenschaufeln zu verwenden, die noch einen metallischen Kern aufweisen, der von einer Keramik umgeben ist, wie es beispielsweise aus der US-PS 4,563,128 bekannt ist. Der Offenbarungsgehalt dieser Schrift zum Aufbau der keramischen Turbinenschaufel soll ausdrücklich offenbarungsgehalt dieser Anmeldung sein. Weitere Arten von Hybridschaufeln sind denkbar.

Figur 4 zeigt eine beispielhafte Hybridschaufel 16. Ein Schaufelblatt 28 besteht an seiner Aussenfläche aus Keramik 39. Im Innern ist ein metallischer Kern 31 bspw. aus einer Nickel- und/oder Cobalt-Superlegierung vorhanden. Der metallische Kern 31 bildet bspw. auch einen Fussteil 34 der Schaufel 16.

In radialer Richtung 19 erstreckt sich der metallische Kern 31 nicht bis zum radialen Ende 37 der Schaufel 16, sondern bspw. nur bis zu z.B. 70% der Länge des Schaufelblatts 28 in radialer Richtung 19, da sonst die durch die Fliehkräfte bei der vorgesehenen Drehzahl der Turbine hervorgerufenen Belastungen die mechanische Festigkeit des metallischen Kerns oder des Schaufelfußes oder der Verankerung in der Turbinenwelle übersteigen würden.

Der metallische Kern 31 kann zumindest teilweise aus metallischen Schaum sein, um eine weitere Gewichtsersparnis zu erzielen.

Der Volumenanteil am Material der Keramik beträgt mindestens 40% oder überragt bspw. auch den des metallischen Kerns 31, so dass die Schaufel 16 einen hohen Materialvolumenanteil aus Keramik aufweist.

Der Anteil der Keramik 39 kann sich auch überwiegend am Ende 37 der Schaufel 16 befinden, da dort die grössten Fliehkräfte auftreten (Fig. 5a). Ein restlicher Teil 38 der Schaufel 16 besteht aus Metall, bspw. aus einer Nickel- und/oder Cobalt-Superlegierung. Die Hybridschaufel 16 kann auch zur weiteren Gewichtsreduzierung innen hohl ausgeführt sein.

Ebenso kann, wie in Figur 5b dargestellt ist, ein Gerüst aus 40 aus Metall bspw. aus einer Nickel- und/oder Cobalt-Superlegierung vorgesehen sein, in das keramische Teile eingesetzt werden.

Das Gerüst 40 besteht bspw. aus einer Vorderkante 70, die von dem Medium in Strömungsrichtung zuerst angeströmt wird, einer Hinterkante 73, dem Fussteil 34 und der Spitze 76 sowie dem radialen Ende 37.

Die Laufschaufel 16 kann innen auch hohl sein und durch Luft und/oder Dampfkühlung mit oder ohne Filmkühlbohrungen gekühlt werden.

Es ist bisher nicht bekannt, dass man keramische Laufschaufeln in gegenüber herkömmlicher Dimensionierung deutlich vergrößerter Länge auf Grund ihrer geringeren Dichte und der damit verbundenen Reduzierung der Fliehkräfte vorteilhaft zur Steigerung des Turbinenwirkungsgrades einsetzen kann.

## Patentansprüche

1. Turbine, insbesondere Gasturbine,
die zumindest vier Stufen von aufeinanderfolgend angeordneten Turbinenschaufeln (16) aufweist,
wobei eine Stufe jeweils durch eine Laufschaufelreihe und eine Leitschaufelreihe gebildet ist,
wobei die Laufschaufeln (16) einen metallischen Fußteil (34) aufweisen,
dass zumindest die vierte Laufschaufelreihe (V4) Laufschaufeln (16) aufweist,
bei denen mindestens 40% Volumenanteil des Materials eine Dichte von maximal 4g/cm³ aufweist,
so dass gegenüber einer metallischen Laufschaufel eine deutlich verringerte Masse vorhanden ist,
dass die Lauf schaufeln (16) eine Mindestlänge von 50cm aufweisen,
**dadurch gekennzeichnet,**
**dass** die Laufschaufel (16) zumindest ab 80% der Länge (L) des Schaufelblatts (28) in radialer Richtung (19) nur noch aus Keramik (39) ist.

2. Turbine nach Anspruch 1,
**dadurch gekennzeichnet, dass**
die Laufschaufel (16) jeweils in einer metallischen Läuferscheibe (25) eingesetzt ist.

3. Turbine nach Anspruch 1,
**dadurch gekennzeichnet, dass**
die Laufschaufel (16) jeweils einen metallischen Kern (31) aufweist,
der von Keramik (39) umgeben ist.

4. Turbine nach Anspruch 3,
**dadurch gekennzeichnet, dass**
der metallische Kern (31) zumindest teilweise aus einem metallischem Schaum ist.

5. Turbine nach Anspruch 1,
**dadurch gekennzeichnet, dass**
die Keramik eine Schutzschicht (36) aufweist.

6. Turbine nach Anspruch 1,
**dadurch gekennzeichnet, dass**
die Laufschaufel (16) eine Länge von mindestens 65cm aufweist.

7. Turbine nach Anspruch 1,
**dadurch gekennzeichnet, dass**
die Laufschaufel (16) ein metallisches Gerüst (40) aufweist,
in das Keramikteile (39) eingesetzt sind.

8. Turbine nach Anspruch 1,
**dadurch gekennzeichnet, dass**
das Material mit der Dichte von maximal 4g/cm³ eine Keramik oder ein Glas ist.

9. Turbine nach Anspruch 1,
**dadurch gekennzeichnet, dass**
das Material mit der Dichte von maximal 4g/cm³ ein kohlenstoffhaltiges Material ist.

## Claims

1. Turbine, in particular a gas turbine, which has at least four stages of successively arranged turbine blades and vanes (16), with a stage in each case being formed by a row of rotor blades and a row of guide vanes, with the rotor blades (16) having a metallic root part (34), in that at least the fourth row of rotor blades (V4) includes rotor blades (16) in which at least 40% by volume of the material has a density of at most 4 g/cm³, so that the mass is significantly reduced compared to a metallic rotor blade, in that the minimum length of the rotor blades (16) is 50 cm, **characterized in that** the rotor blade (16), at least beyond 80% of the length (L) of the main blade section (28) in the radial direction (19), consists exclusively of ceramic (39).

2. Turbine according to Claim 1, **characterized in that** the rotor blade (16) is in each case inserted into a metallic rotor disk (25).

3. Turbine according to Claim 1, **characterized in that** the rotor blade (16) in each case has a metallic core (31) which is surrounded by ceramic (39).

4. Turbine according to Claim 3, **characterized in that** the metallic core (31) is formed at least in part from a metallic foam.

5. Turbine according to Claim 1, **characterized in that** the ceramic has a protective layer (36).

6. Turbine according to Claim 1, **characterized in that** the length of the rotor blade (16) is at least 65 cm.

7. Turbine according to Claim 1, **characterized in that** the rotor blade (16) has a metallic skeleton (40) into which ceramic parts (39) are introduced.

8. Turbine according to Claim 1, **characterized in that** the material with the density of at most 4 g/cm³ is a ceramic or a glass.

9. Turbine according to Claim 1, **characterized in that** the material with the density of at most 4 g/cm³ is a carbon-containing material.

## Revendications

1. Turbine, notamment turbine à gaz, qui a au moins quatre étages d'aubes (16) de turbine qui se succèdent, un étage étant formé, respectivement, par une rangée d'aubes mobiles et par une rangée d'aubes directrices,
les aubes (16) mobiles ayant une emplanture (34) métallique,
dans laquelle au moins la quatrième rangée (V4) d'aubes mobiles a des aubes (16) mobiles,
dans lesquelles au moins 40 % en volume du matériau a une épaisseur de 4 g/m³ au maximum,
de sorte qu'il y a, par rapport à une aube mobile métallique, une nette diminution de masse,
dans laquelle les aubes (16) mobiles ont une longueur minimum de 50 cm, **caractérisée**
**en ce que** l'aube (16) mobile est, au moins à partir de 80 % de la longueur (L) de lame (28) de l'aube en direction (19) radiale, seulement en céramique (39).

2. Turbine suivant la revendication 1, **caractérisée en ce que** l'aube (16) mobile est insérée, respectivement, dans un disque (25) métallique de rotor.

3. Turbine suivant la revendication 1, **caractérisée en ce que** l'aube (16) mobile a, respectivement, un noyau (31) métallique qui est entouré de céramique (39).

4. Turbine suivant la revendication 3, **caractérisée en ce que** le noyau (31) métallique est, au moins en partie, en une mousse métallique.

5. Turbine suivant la revendication 1, **caractérisée en ce que** la céramique a une couche (36) de protection.

6. Turbine suivant la revendication 1, **caractérisée en ce que** l'aube (16) mobile a une longueur d'au moins 65 cm.

7. Turbine suivant la revendication 1, **caractérisée en ce que** l'aube (16) mobile a une ossature (40) métallique dans laquelle sont insérées des parties (39) en céramique.

8. Turbine suivant la revendication 1, **caractérisée en ce que** le matériau ayant la masse volumique de 4 g/cm³ au maximum est une céramique ou un verre.

9. Turbine suivant la revendication 1, **caractérisée en ce que** le matériau ayant la masse volumique de 4 g/cm³ au maximum est un matériau carbonacé.
